# EUROPEAN PATENT APPLICATION

(11) **EP 4 817 932 A1**
(43) Date of publication of application: **07.10.2026**
(21) Application number: 25202683.6
(22) Date of filing: 17.09.2025
(51) Int. Cl.: B60L 7/26, B60L 15/20, B60W 30/18

(54) **ELECTRIFIED VEHICLE AND A METHOD FOR CONTROLLING REGENERATIVE BRAKING THEREOF**

(30) Priority: 02.04.2025 KR 20250043095
(71) Applicant: Hyundai Motor Company, Seoul 06797 (KR); Kia Corporation, Seoul 06797 (KR)
(72) Inventor: HUH, Jee Wook, 18280 Hwaseong-si, Gyeonggi-do (KR); YUN, Young Min, 18280 Hwaseong-si, Gyeonggi-do (KR); KANG, Ku Young, 18280 Hwaseong-si, Gyeonggi-do (KR); NAM, Ju Hyun, 18280 Hwaseong-si, Gyeonggi-do (KR); LEE, Seul Gi, 18280 Hwaseong-si, Gyeonggi-do (KR)
(74) Representative: Isarpatent

(57) **Abstract**

An electrified vehicle includes a powertrain mechanically connected to a main drive wheel, which is a rear wheel, and having a drive motor. The electrified vehicle further includes a driving force distribution device configured to selectively distribute output torque of the powertrain to an auxiliary drive wheel, which is a front wheel. The electrified vehicle further includes a controller configured to, upon receiving a braking demand, determine whether the auxiliary drive wheel participates in regenerative braking based on a regenerative braking capacity of the drive motor. The controller is further configured to control the drive motor and the driving force distribution device based on a determination result of whether the auxiliary drive wheel participates in the regenerative braking.

## Description

### TECHNICAL FIELD

The present disclosure relates to an electrified vehicle configured to perform regenerative braking and a method of regenerative braking control for the same.

### BACKGROUND

As interest in the environment has increased recently, the number of eco-friendly vehicles equipped with electric motors as a power source is increasing. An eco-friendly vehicle is also called an electrified vehicle, and a representative example includes a hybrid electric vehicle (HEV) and an electric vehicle (EV).

Among these, a hybrid vehicle can achieve high efficiency by selectively driving an engine and a motor depending on driving conditions. The motor can further increase the efficiency of a hybrid vehicle by performing regenerative braking, which uses braking torque to generate electricity and charge a battery, in addition to cranking to start the engine.

An upper controller of a controller of each driving source of an electrified vehicle can determine a torque demanded by a driver based on information received from an accelerator position sensor (APS) or a brake position sensor (BPS). The upper controller of a controller of each driving source of an electrified vehicle can calculate a command torque for each driving source by considering the power distribution according to the control strategy and the torque demanded for transient control. A controller for each driving source can receive command torque, control each driving source and determine the output torque. These demanded torques may include acceleration torque and braking torque.

For a rear-wheel-drive electrified vehicle, the rear wheel grip force increases during acceleration and allows stable driving in a situation where high output is demanded. However, in case of performing regenerative braking, generating power through a rear wheel, which is the main drive wheel, is advantageous in terms of energy recovery rate, but braking safety may be reduced due to a decrease in the grip force of the rear wheel in case of braking.

The foregoing descriptions in the background section are intended merely to aid in the understanding of the background of the present disclosure and are not intended to mean that the present disclosure falls within the purview of the related art already known to those having ordinary skill in the art.

### SUMMARY

The technical problem to be solved by embodiments disclosed in the present disclosure is to provide a rear-wheel-drive electrified vehicle capable of more effective regenerative braking, and a method of regenerative braking control for the same.

The technical subject matters of the present disclosure may not be limited to the above-mentioned technical subjects. Other technical subject matters, which are not mentioned herein, may be clearly understood from the present disclosure by those having ordinary skill in the art to which the present disclosure pertains.

According to an embodiment, an electrified vehicle includes a powertrain mechanically connected to a main drive wheel, which is a rear wheel, and having a drive motor. The electrified vehicle further includes a driving force distribution device configured to selectively distribute output torque of the powertrain to an auxiliary drive wheel, which is a front wheel, and. The electrified vehicle further includes a controller configured to, upon receiving a braking demand, determine whether the auxiliary drive wheel participates in regenerative braking based on a regenerative braking capacity of the drive motor in case that a braking demand is received. The controller is further configured to control the drive motor and the driving force distribution device based on a determination result of whether the auxiliary drive wheel participates in the regenerative braking.

In an embodiment, the controller may determine the regenerative braking capacity of the drive motor based on a rechargeable capacity of a battery and a power generation capacity obtainable through regenerative braking from the drive motor.

In an embodiment, the controller may determine an allowable regenerative braking amount of the drive motor based on a total demanded braking amount and the regenerative braking capacity of the drive motor.

In an embodiment, the controller may determine participation of the auxiliary drive wheel in regenerative braking based on the allowable regenerative braking amount and a regenerative braking amount limit of the main drive wheel for braking safety of the electrified vehicle.

In an embodiment, the controller may determine the participation of the auxiliary drive wheel in the regenerative braking upon determining that the allowable regenerative braking amount is greater than the regenerative braking amount limit of the main drive wheel.

In an embodiment, upon determining the participation of the auxiliary drive wheel in the regenerative braking, the controller may determine the distribution ratio between the main drive wheel and the auxiliary drive wheel.

In an embodiment, the controller may determine a regenerative braking torque for each drive wheel based on the allowable regenerative braking amount and the distribution ratio.

In an embodiment, the controller may determine the distribution ratio so that a regenerative braking torque of the main drive wheel is greater than or equal to a regenerative braking torque of the auxiliary drive wheel.

In an embodiment, upon determining that the auxiliary drive wheel does not participate in the regenerative braking, the controller may determine the regenerative braking torque of the main drive wheel based on the regenerative braking amount limit of the main drive wheel.

In an embodiment, the controller may determine a hydraulic braking amount for each drive wheel based on a regenerative braking execution amount caused by regenerative braking for each drive wheel and a braking amount limit of the main drive wheel for braking safety of the electrified vehicle.

In an embodiment, the controller may determine the braking amount limit of the main drive wheel based on the total braking amount. The controller may, upon determining that a regenerative braking execution amount of the main drive wheel is greater than the braking amount limit of the main drive wheel, may determine a hydraulic braking amount of the main drive wheel as 0. The controller may determine the hydraulic braking amount of the main drive wheel as a value obtained by subtracting the regenerative braking execution amount of the main drive wheel from the braking amount limit of the main drive wheel.

In an embodiment, the controller may determine the braking amount limit of the main drive wheel to be less than or equal to half of a total braking amount.

According to another embodiment, a method of regenerative braking control for an electrified vehicle includes determining a regenerative braking capacity of a drive motor upon receiving a braking demand. The method further includes determining whether an auxiliary drive wheel, which is the front wheel, participates in regenerative braking based on the regenerative braking capacity of the drive motor. The method further includes controlling the drive motor and a driving force distribution device based on a determination result of whether the auxiliary drive wheel participates in the regenerative braking.

In an embodiment, the regenerative braking capacity may be determined based on a rechargeable capacity of a battery and a power generation capacity obtainable through regenerative braking from the drive motor.

In an embodiment, determining whether the auxiliary drive wheel participates in the regenerative braking may include determining participation of the auxiliary drive wheel in the regenerative braking based on an allowable regenerative braking amount determined based on a regenerative braking amount limit of a main drive wheel for braking safety of the electrified vehicle, the regenerative braking capacity, and the total demanded braking amount.

In an embodiment, determining whether the auxiliary drive wheel participates in the regenerative braking may include determining the participation of the auxiliary drive wheel in the regenerative braking upon determining that the allowable regenerative braking amount is greater than the regenerative braking amount limit of the main drive wheel.

In an embodiment, controlling the drive motor and the driving force distribution device may include determining a distribution ratio between the main drive wheel and the auxiliary drive wheel upon determining the participation of the auxiliary drive wheel in the regenerative braking.

In an embodiment, controlling the drive motor and the driving force distribution device may include determining a regenerative braking torque for each drive wheel based on the allowable regenerative braking amount and the distribution ratio.

In an embodiment, the method may further include determining a hydraulic braking amount for each drive wheel based on the regenerative braking execution amount caused by the regenerative braking for each drive wheel and a braking amount limit of the main drive wheel for braking safety of the electrified vehicle.

In an embodiment, determining the hydraulic braking amount for each drive wheel may include determining the braking amount limit of the main drive wheel based on a total braking amount. Determining the hydraulic braking amount for each drive wheel may further include determining a hydraulic braking amount of the main drive wheel as 0 upon determining that the regenerative braking execution amount of the main drive wheel is greater than the braking amount limit of the main drive wheel. Determining the hydraulic braking amount for each drive wheel may further include determining the hydraulic braking amount of the main drive wheel as a value obtained by subtracting the regenerative braking execution amount of the main drive wheel from the braking amount limit of the main drive wheel.

According to an embodiment disclosed herein, in case that regenerative braking is performed on an electrified vehicle having rear wheels as the main drive wheels, braking safety and a high energy recovery rate can be secured through cooperative control between the front and rear wheels.

Advantageous effects obtainable from the present disclosure may not be limited to the above-mentioned effects, and other effects, which are not mentioned herein, may be clearly understood from the present disclosure by those having ordinary skill in the art to which the present disclosure pertains.

### BRIEF DESCRIPTION OF THE DRAWINGS

The above and other aspects, features, and advantages of the present disclosure should be more apparent from the following detailed description taken in conjunction with the accompanying drawings, in which:
FIG. 1 shows an example of a powertrain configuration of a hybrid vehicle according to an embodiment disclosed herein;
FIG. 2 shows an example of a control system configuration of a hybrid vehicle according to an embodiment disclosed herein;
FIG. 3 is a flowchart showing an example of a process in which a brake controller according to an embodiment disclosed herein determines a total demanded braking amount, an allowable regenerative braking amount, and the like and performs hydraulic braking based on a regenerative braking execution amount;
FIG. 4 is a graph showing an example of a total demanded braking amount according to a braking demand, a regenerative braking capacity of a drive motor, and a regenerative braking amount limit of a rear wheel;
FIG. 5 is a graph showing an example of the distribution between a regenerative braking execution amount and a hydraulic braking amount in case that regenerative braking is performed using only rear wheels;
FIG. 6 is a graph showing an example of the distribution between a regenerative braking execution amount and a hydraulic braking amount in case that regenerative braking is performed through four-wheel cooperative control;
FIG. 7 is a flowchart showing an example of a process in which a chassis controller according to an embodiment disclosed herein receives a four-wheel regenerative braking switching demand or a two-wheel regenerative braking keeping demand and controls a driving force distribution device; and
FIG. 8 is a flowchart showing an example of a process in which a hybrid controller according to an embodiment disclosed herein determines a regenerative braking capacity and generates a regenerative braking demand according to a regenerative braking distribution ratio.

### DETAILED DESCRIPTION

Hereinafter, embodiments set forth herein are described in detail with reference to the accompanying drawings, and the same or similar elements are given the same and similar reference numerals regardless of figure numbers, so duplicate descriptions thereof have been omitted. The terms "module" and "unit" used for the elements in the present disclosure are given or interchangeably used in consideration of only the ease of writing the specification and do not have distinct meanings or roles by themselves. Furthermore, in describing the embodiments set forth herein, a detailed description of known relevant technologies has been omitted when it is determined that the description may make the subject matter of the present disclosure obscure. In addition, it should be appreciated that the accompanying drawings are provided only for the sake of easy understanding of the embodiments set forth herein. The technical idea of the present disclosure is not limited to the accompanying drawings and includes all modifications, equivalents, or alternatives falling within the spirit and scope of the present disclosure.

Terms including an ordinal number such as "a first" and "a second" may be used to describe various elements, but the elements are not limited to the terms. The above terms are used merely for the purpose of distinguishing one element from other elements.

In the case where an element is referred to as being "connected" or "coupled" to any other elements, it should be understood that not only the element may be directly connected or coupled to the other elements, but also another element may exist therebetween. By contrast, in the case where an element is referred to as being "directly connected" or "directly coupled" to any other element, it should be understood that no other element exists therebetween.

A singular expression may include a plural expression unless they are definitely different in a context.

As used herein, the expression "include" or "have" is intended to specify the existence of mentioned features, numbers, steps, operations, elements, components, or combinations thereof, and should be construed as not precluding the possible existence or addition of one or more other features, numbers, steps, operations, elements, components, or combinations thereof.

A unit or a control unit included in names such as a motor control unit (MCU) is merely a term widely used for naming a controller configured to control a specific function of a vehicle and does not mean a generic function unit. For example, in order to control a function that a control unit is responsible for, each control unit may include a communication device configured to communicate with a sensor or another control unit, a memory configured to store an operation system, a logic command, or input/output information, and at least one processor configured to perform determination, calculation, decision or the like which are required for responsible function controlling. When a controller, module, component, device, element, or the like of the present disclosure is described as having a purpose or performing an operation, function, or the like, the controller, module, component, device, element, or the like should be considered herein as being "configured to" meet that purpose or to perform that operation or function. Each controller, module, component, device, element, and the like may separately embody or be included with a processor and a memory, such as a non-transitory computer readable media, as part of the apparatus.

Before explaining a method of regenerative braking control according to embodiments of the present disclosure, the structure and control system of a hybrid vehicle applicable to the embodiments are first explained.

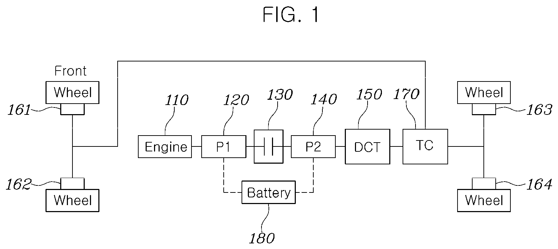

FIG. 1 shows an example of a powertrain configuration of a hybrid vehicle according to an embodiment disclosed herein.

Referring to FIG. 1, a powertrain of a hybrid vehicle that employs a parallel-type hybrid system having two motors 120 and 140 and an engine clutch 130 mounted between an engine (Internal Combustion Engine, ICE) 110 and a transmission 150 is illustrated.

The first motor 120 is disposed between the engine 110 and one end of the engine clutch 130. An engine shaft of the engine 110 and the first motor shaft of the first motor 120 are directly connected to each other and may always rotate together.

One end of a second motor shaft of the second motor 140 is connected to the other end of the engine clutch 130, and the other end of the second motor shaft may be connected to an input end of the transmission 150.

The second motor 140 may have greater output than the first motor 120, and the second motor 140 may serve as a drive motor. In addition, the first motor 120 may function as a starter motor that cranks the engine 110 when the engine 110 is started, may recover the rotational energy of the engine 110 through power generation in case that the engine is off, and may also generate power using the power of the engine 110 while the engine 110 is running.

In a hybrid vehicle provided with a powertrain as illustrated in FIG. 1, in case that a driver steps on the accelerator pedal after starting (e.g., HEV Ready), the second motor 140 is first driven using power from a battery 180 in a state where the engine clutch 130 is open. Accordingly, the power of the second motor 140 is transmitted to the transmission 150 to move the wheels (i.e., EV mode). As the vehicle gradually accelerates and more driving force is demanded, the first motor 120 may operate to crank the engine 110.

After the engine 110 starts, in case that the difference in rotation speed between the engine 110 and the second motor 140 becomes within a predetermined range, the engine clutch 130 is engaged and the engine 110 and the second motor 140 rotate together (i.e., transition from EV mode to HEV mode). Accordingly, through a torque blending process, the output of the second motor 140 may decrease and the output of the engine 110 may increase to meet the torque demanded by the driver. In the HEV mode, most of the demanded torque may be satisfied by the engine 110, and the difference between the engine torque and the demanded torque may be compensated by at least one of the first motor 120 or the second motor 140. For example, in case that the engine 110 outputs a torque higher than the demanded torque considering the efficiency of the engine 110, the first motor 120 or the second motor 140 may generate power equivalent to the surplus engine torque, and in case that the engine torque is less than the demanded torque, at least one of the first motor 120 and the second motor 140 may output a torque as much as the difference between the two torques.

In case that a preconfigured engine off condition such as the deceleration of a vehicle is met, the engine clutch 130 may be opened and the engine 110 may be stopped (i.e., transitioning from HEV mode to EV mode). At the time of the deceleration, the driving force of the wheels may be used to charge the battery through the second motor 140, which is called braking energy regeneration, or regenerative braking.

Generally, a variable speed transmission or a multi-plate clutch such as a dual clutch transmission (DCT) may be used for the transmission 150.

Hydraulic braking devices (161, 162, 163, 164) may decelerate a vehicle by applying frictional force to the front or rear wheels. In particular, in case that regenerative braking is performed according to the demanded braking torque, the shortage of braking torque provided through the regenerative braking may be met through hydraulic braking.

A driving force distribution device 170 may selectively distribute, to the auxiliary drive wheel, a portion of the power transmitted from the driving source to the main drive wheel. For example, in case of driving at a constant speed on a highway, power may be transmitted only to the main drive wheel for high fuel efficiency, and on unpaved roads, power may be transmitted to the auxiliary drive wheel as well as the main drive wheel for stable driving.

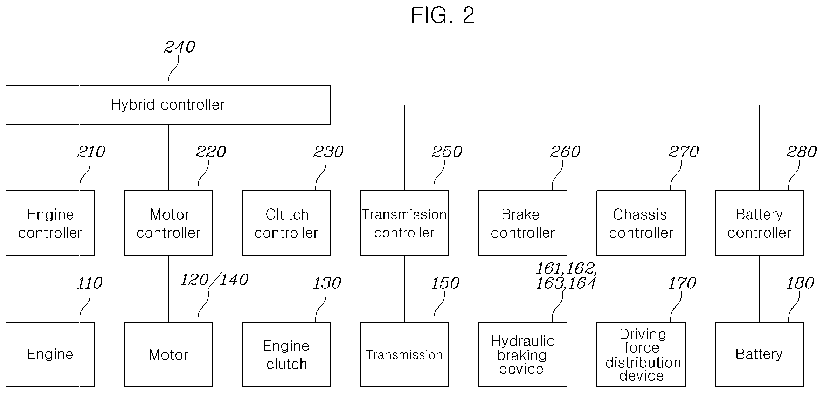

FIG. 2 shows an example of a control system configuration of a hybrid vehicle according to an embodiment disclosed herein.

Referring to FIG. 2, in a hybrid vehicle to which embodiments of the present disclosure may be applied, the internal combustion engine 110 is controlled by an engine controller 210, the first motor 120 and the second motor 140 may have the torques controlled by a motor controller (e.g., Motor Control Unit, MCU) 220, and the engine clutch 130 may be controlled by a clutch controller 230.

The motor controllers 220 may include a first motor controller and a second motor controller and may control a gate drive unit (not shown) with a control signal in the form of pulse width modulation (PWM) based on the motor angle, phase voltage, phase current, demanded torque, etc. of each of the motors 120 and 140.

In addition, the transmission 150 may be controlled by the transmission controller 250, and the hydraulic braking devices 160 may be controlled by a brake controller 260. A chassis controller 270 may determine the driving force distribution ratio between the front and rear wheels and may thus control the driving force distribution device 170.

A battery controller 280 may monitor the voltage, current, temperature, etc. of a battery 180. The battery controller 280 may diagnose a battery cell failure and determine the battery's status, such as the State Of Charge (SOC) and degradation (State Of Health, SOH).

Each controller may be connected to a hybrid controller (e.g., Hybrid Control Unit, HCU, 240) that controls the entire powertrain, including the mode switching process, as an upper controller thereof. Each controller may change the driving mode according to the control of the hybrid controller 240, may provide the hybrid controller 240 with information necessary for engine clutch control and information necessary for engine stop control at the time of changing gears, or may perform an operation according to a control signal.

For example, the hybrid controller 240 determines whether to perform a switch between electric vehicle (EV) and hybrid electric vehicle (HEV) modes or CD(Charge Depleting) and CS(Charge Sustaining) modes (in the case of a PHEV) depending on the driving condition of the vehicle. To this end, the hybrid controller determines the release (open) time point of the engine clutch 130 and performs hydraulic control at the time of release. In addition, the hybrid controller 240 may determine the status (lock-up, slip, open, etc.) of the engine clutch 130 and may control the fuel injection stop time point of the engine 110. Additionally, the hybrid controller may control engine rotation energy recovery by transmitting a torque command to the motor controllers 220 to control the torque of the first motor 120 for engine stop control. In addition, the hybrid controller 240 may determine the status of each driving source 110, 120, and 140 to satisfy the demanded torque and determine the demanded driving force to be shared by each driving source 110, 120, and 140 accordingly so as to transmit a torque command to the controllers 210 and 220 that control each driving source.

It should be apparent to those having ordinary skill in the art that the above-described connection relationship between controllers and the function/distinction of each controller are exemplary and are not limited to the names. For example, the hybrid controller 240 may be implemented such that the functionality of the controller is substituted and provided by one of the other controllers except the controller or may be implemented such that the functionality is provided by being distributed across two or more of the other controllers.

Below, under the assumption of a hybrid vehicle having rear wheels as the main drive wheels, in case that there is a braking demand, description is made about an embodiment of performing regenerative braking using only rear wheels or performing regenerative braking through four-wheel regenerative braking cooperative control in which both the front and rear wheels participate in regenerative braking, focusing on the roles of the brake controller 260, the chassis controller 270, and the hybrid controller 240.

Description is made about torque-based control, which converts information demanded for cooperative control (e.g., regenerative braking capability) into torque and controls it. However, it is not limited to this control method, and power-based control is also possible as another example.

In addition, the term, braking demand, includes not only a braking demand made by the driver's brake pedal operation, but also a braking demand unrelated to the driver's will, such as a braking demand made in an autonomous driving situation or due to intervention by Advanced Driver Assistance Systems (ADAS). However, for convenience, it is assumed that the braking demand is caused by the driver's brake pedal operation.

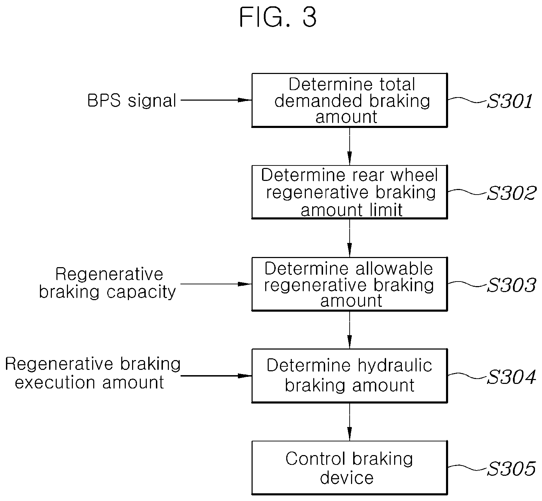

FIG. 3 is a flowchart showing an example of a process in which a brake controller according to an embodiment disclosed herein determines a total demanded braking amount, an allowable regenerative braking amount, and the like and performs hydraulic braking based on a regenerative braking execution amount.

Referring to FIG. 3, the brake controller 260 may receive a brake position sensor (BPS) signal resulting from the driver's brake pedal operation and may determine the driver's total demanded braking amount based on the received signal (S301).

Braking safety may be reduced due to slip when the braking torque transmitted to the rear wheel drive shaft is excessive, and thus the brake controller 260 may determine a rear wheel regenerative braking amount limit, which limits rear wheel regenerative braking (S302). The rear wheel regenerative braking amount limit may be preconfigured by considering the total weight, weight distribution, etc. of the vehicle, but may also be determined by further considering a driving condition such as a vehicle speed and a road condition.

Afterwards, the brake controller 260 may receive information on the regenerative braking capacity from the hybrid controller 240 and may determine the allowable regenerative braking amount (S303).

As an example of a method for determining the allowable regenerative braking amount, in case that the regenerative braking capacity received from the hybrid controller 240 is 80 units and the total demanded braking amount is 100 units, the allowable regenerative braking amount may be determined as 80, which is the smaller value between the total demanded braking amount and the regenerative braking amount.

The brake controller 260 may transmit the determined allowable regenerative braking amount to the hybrid controller 240 and may receive the regenerative braking execution amount, which is the result of performing regenerative braking, from the hybrid controller 240. The brake controller 260 may determine the front wheel hydraulic braking amount and the rear wheel hydraulic braking amount based on the total demanded braking amount and the regenerative braking execution amount (S304).

As an example of a method for determining the hydraulic braking amount, in case that the total demanded braking amount is 100 units, the front wheel regenerative braking amount is 20 units, and the rear wheel regenerative braking amount is 40 units, the brake controller 260 may determine the hydraulic braking amount as 40 units by subtracting 60 units, which is the sum of the front wheel regenerative braking amount and the rear wheel regenerative braking amount, from the total demanded braking amount of 100 units. In addition, the brake controller 260 may determine a rear wheel braking amount limit, which is a reference for limiting the total braking amount of the rear wheels for the safety of the vehicle. The brake controller 260 may determine the rear wheel hydraulic braking amount and the front wheel hydraulic braking amount, respectively, based on the determined rear wheel braking amount limit.

For example, in case that the rear wheel braking amount limit is determined as 30 units, which is 30 percent of the total demanded braking amount, the rear wheel regenerative braking execution amount (40 units) is greater than the rear wheel braking amount limit, and thus the rear wheel hydraulic braking amount may be determined as 0 and the front wheel hydraulic braking amount may be determined as 40 units. As another example, in case that the rear wheel braking amount limit is determined as 45 units, which is 45 percent of the total demanded amount, the difference between the rear wheel braking amount limit and the rear wheel regenerative braking execution amount (40 units), which is 5 units, may be determined as the rear wheel hydraulic braking amount, and the front wheel hydraulic braking amount may be determined as 35 units.

The brake controller 260 can satisfy the total demanded braking amount by controlling each hydraulic braking device 161, 162, 163, and 164 according to the front wheel hydraulic braking amount and the rear wheel hydraulic braking amount (S305).

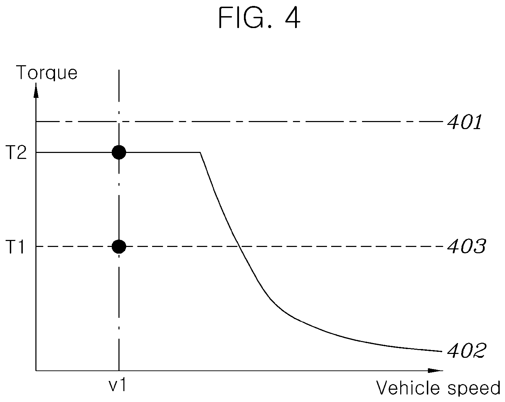

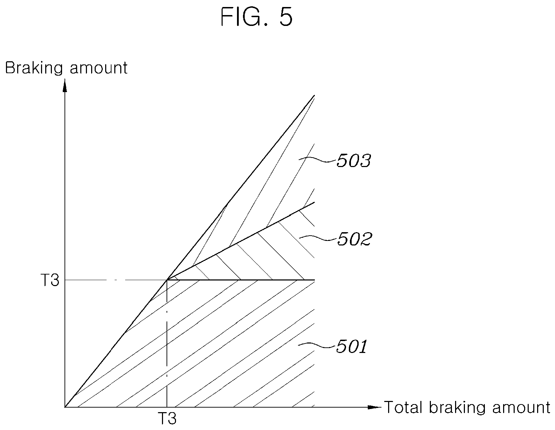

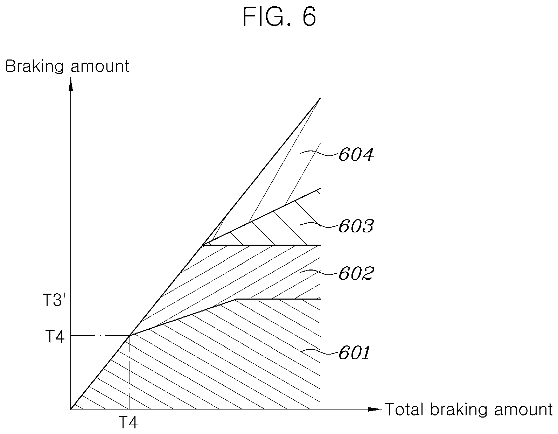

A comparison between the allowable regenerative braking amount in case that only the rear wheels are used for regenerative braking and the allowable regenerative braking amount in case that four-wheel regenerative braking cooperative control is performed is described in detail later with FIG. 4, and a comparison of the regenerative braking execution amounts between the two cases is described in detail later with FIG. 5 and FIG. 6.

FIG. 4 is a graph showing an example of a total demanded braking amount according to a braking demand, a regenerative braking capacity of a drive motor, and a regenerative braking amount limit of a rear wheel.

Referring to FIG. 4, the total demanded braking amount determined by the brake controller 260 upon receiving a braking demand may be expressed as in graph 401. In case that the temperature of the drive motor 140, the temperature of the battery 180, and the SOC are constant, the regenerative braking capacity according to the vehicle speed may be expressed as in graph 402. Additionally, the rear wheel regenerative braking amount limit considering braking safety can be expressed as in graph 403.

In case that the hybrid vehicle performs regenerative braking using only the rear wheels, the allowable regenerative braking amount may be determined as the smallest value among the total demanded braking amount 401, the regenerative braking capacity 402, and the rear wheel regenerative braking amount limit 403. However, in case that the front wheel participates in regenerative braking, the allowable regenerative braking amount is not limited within the rear wheel regenerative braking amount limit 403 but may be determined as the smaller value between the total demanded braking amount 401 and the regenerative braking capacity 402 of the drive motor.

For example, in case that regenerative braking is performed using only the rear wheels while the current vehicle speed is v1, the allowable regenerative braking amount may be determined as T1, which is the smallest value among the total demanded braking amount 401, the regenerative braking capacity 402 of the drive motor, and the rear wheel regenerative braking amount limit 403. However, when the front wheels participate in regenerative braking, the allowable regenerative braking amount is not limited to the rear wheel regenerative braking amount limit 403 and may be determined as T2, which is the smaller value between the total demanded braking amount 401 and the regenerative braking capacity 402.

Therefore, in case that the total demanded regenerative braking amount is the same, a higher energy recovery rate may be achieved in case that regenerative braking is performed through four-wheel cooperative control than in case that only the rear wheels are used for regenerative braking.

FIG. 5 is a graph showing an example of the distribution between a regenerative braking execution amount and a hydraulic braking amount in case that regenerative braking is performed using only rear wheels, and FIG. 6 is a graph showing an example of the distribution between a regenerative braking execution amount and a hydraulic braking amount in case that regenerative braking is performed through four-wheel cooperative control.

Referring to FIG. 5, in case that the total demanded regenerative braking amount is small (T3 or less), the total demanded braking amount may be fully satisfied through the regenerative braking execution amount (501). However, in case that the total demanded braking amount increases (exceeds T3), the braking safety may be compromised in case that the regenerative braking execution amount increases, and thus the increased amount in the demanded braking amount may be satisfied through the front wheel hydraulic braking amount (502) and the rear wheel hydraulic braking amount (503).

On the other hand, referring to FIG. 6, in case of performing the four-wheel regenerative braking cooperative control according to an embodiment, in case that the total demanded braking amount is small (T4 or less), the total demanded braking amount may be satisfied by the rear wheel regenerative braking execution amount (601), and in case that the total demanded braking amount becomes greater than the rear wheel regenerative braking amount limit (exceeding T4), the front wheels may also participate in the regenerative braking (602). The rear wheel regenerative braking execution amount (601) may have a value greater than the rear wheel regenerative braking amount limit (greater than T4 and less than or equal to T3') depending on the regenerative braking distribution ratio between the front and rear wheels. As a result, the total regenerative braking amount may be larger (601 and 602) in case that the four-wheel regenerative braking cooperative control is performed compared to in case that only rear-wheel regenerative braking is performed (501 in FIG. 5). Therefore, a higher energy recovery rate may be achieved in case of performing regenerative braking using only the rear wheels during the four-wheel regenerative braking cooperative control.

Next, the roles of the chassis controller 270 and the hybrid controller 240 according to an embodiment disclosed herein are described, respectively.

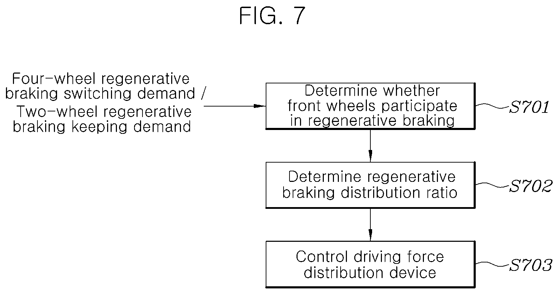

FIG. 7 is a flowchart showing an example of a process in which a chassis controller according to an embodiment disclosed herein receives a four-wheel regenerative braking switching demand or a two-wheel regenerative braking keeping demand and controls a driving force distribution device.

Referring to FIG. 7, the chassis controller 270 may receive a four-wheel regenerative braking switching demand or a 2-wheel regenerative braking keeping demand from the hybrid controller 240 and may determine whether the front wheels participate in regenerative braking and the distribution ratio between the front and rear wheels (S701, S702).

For example, in case that the chassis controller 270 receives a demand for switching to four-wheel regenerative braking from the hybrid controller 240, the chassis controller may determine whether the front wheels will participate in regenerative braking by considering whether the current vehicle driving mode is a four-wheel drive mode or a rear wheel drive mode and considering the current driving power distribution ratio between the front wheel drive axles and rear wheel drive axles, etc., and may determine the regenerative braking distribution ratio between the front and rear wheels accordingly.

The chassis controller 270 may control the driving force distribution device 170 depending on whether the front wheels participate in regenerative braking and the distribution ratio between the front and rear wheels and may transmit the result to the hybrid controller 240 (S703).

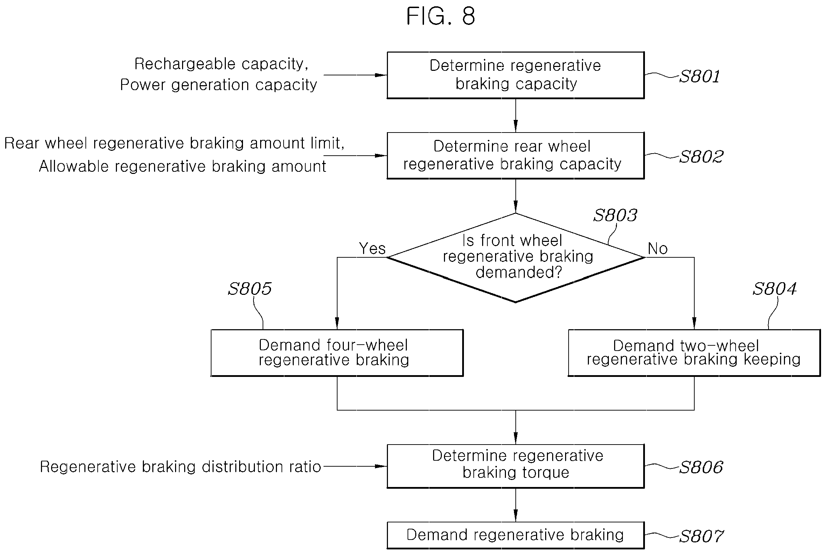

FIG. 8 is a flowchart showing an example of a process in which a hybrid controller 240 according to an embodiment disclosed herein determines a regenerative braking capacity and generates a regenerative braking demand according to a regenerative braking distribution ratio.

The hybrid controller 240 may receive the rechargeable capacity of the battery 180 from the battery controller 280 and the power generation capacity of the second motor 140 from the motor controller 220 to determine the regenerative braking capacity (S801).

As an example of a method for determining the regenerative braking capacity, in case that the rechargeable capacity of the battery 180 is 150 units and the power generation capacity of the second motor 140 is 80 units, the hybrid controller 240 may determine the regenerative braking capacity as 80 units, which is the smaller value between the rechargeable capacity and the power generation capacity, based on the information.

Afterwards, the hybrid controller 240 may receive the rear wheel regenerative braking amount limit and the allowable regenerative braking amount from the brake controller 260 and may determine the rear wheel regenerative braking capacity (S802).

As an example of a method for determining the rear wheel regenerative braking capacity, in case that the rear wheel regenerative braking amount limit is 50 units and the allowable regenerative braking amount is 80 units, the hybrid controller 240 may determine the smaller value of 50 units between the rear wheel regenerative braking amount limit and the allowable regenerative braking amount as the rear wheel regenerative braking capacity.

As another example, in case that the rear wheel regenerative braking amount limit is 50 units and the allowable regenerative braking amount is 40 units, 40 units, which is the entire allowable regenerative braking amount, may be determined as the rear wheel regenerative braking capacity.

However, the hybrid controller 240 may determine the rear wheel regenerative braking capacity to a smaller value or to 0 in case of receiving a regeneration prohibition demand during shifting from the transmission controller 250.

Additionally, the hybrid controller 240 may determine whether the front wheels need to participate in regenerative braking and transmit a demand to keep the two-wheel regenerative braking or a demand to switch to the four-wheel regenerative braking to the chassis controller 270 (S803).

For example, in case that the allowable regenerative braking amount is 40 units and the rear wheel regenerative braking amount limit is 50 units, the allowable regenerative braking amount may be satisfied only by the rear wheel regenerative braking (No of S803), and thus a demand for keeping the two-wheel regenerative braking may be made to the chassis controller 270 (S804). However, in case that the allowable regenerative braking amount is 80 units and the regenerative braking amount limit is 50 units, the allowable regenerative braking amount is greater than the regenerative braking amount limit, and thus the front wheel's participation in regenerative braking may be determined for efficient energy recovery (Yes in S803), and a demand for switching to the four-wheel regenerative braking may be made to the chassis controller 270 (S805).

Afterwards, the hybrid controller 240 may receive the regenerative braking distribution ratio from the chassis controller 270 and, based on the received regenerative braking distribution ratio, may determine the regenerative braking torque of the front and rear wheels, respectively (S806).

As an example of a method for determining the regenerative braking torque of the front and rear wheels, in case that the distribution ratio received from the chassis controller is α(%) for the front wheel and β(%) for the rear wheel, the hybrid controller 240 may determine α(%) of the allowable regenerative braking amount as the front wheel regenerative braking torque and β(%) thereof as the rear wheel regenerative braking torque according to the regenerative braking distribution ratio.

After the front wheel regenerative braking torque and rear wheel regenerative braking torque are determined, the hybrid controller 240 may generate a regenerative braking demand and may transmit the demand to the motor controllers 220 (S807).

Below, the process of performing four-wheel regenerative braking cooperative control is summarized and organized in case that there is a braking demand in a hybrid vehicle according to an embodiment disclosed herein.

First, the hybrid controller 240 may determine the regenerative braking capacity based on current information about the battery 180 and information about the second motor 140. The determination may happen depending on a braking demand, but the determination may also happen independently of the braking demand.

Next, the brake controller 260 may determine the rear wheel regenerative braking amount limit and the allowable regenerative braking amount according to the braking demand to transmit the same to the hybrid controller 240. Based on this, the hybrid controller 240 may determine the rear wheel regenerative braking capacity and may transmit a demand to keep a two-wheel regenerative braking or a demand to switch to a four-wheel regenerative braking to the chassis controller 270.

The chassis controller 270 may determine a regenerative braking distribution ratio according to a demand from the hybrid controller 240, may control the driving force distribution device 170 according to the distribution ratio, and may transmit the control result to the hybrid controller 240. Based on the received distribution ratio, the hybrid controller 240 may determine the front wheel regenerative braking torque and the rear wheel regenerative braking torque, respectively and may transmit the same to the motor controllers 220.

The motor controllers 220 may perform regenerative braking by controlling the second motor 140 based on the received front wheel regenerative braking torque and rear wheel regenerative braking torque and may transmit the resulting regenerative braking execution amount to the hybrid controller 240.

In case that the hybrid controller 240 receives the regenerative braking execution amount and transmits the same to the brake controller 260, the brake controller 260 may determine the hydraulic braking amount based on the regenerative braking execution amount and may control each hydraulic braking device (161, 162, 163, 164) to satisfy the total demanded braking amount.

The brake controller 260 and the hybrid controller 240 according to an embodiment may also be applied to a two-wheel drive hybrid vehicle. In this case, the brake controller 260 may determine the allowable regenerative braking amount based on the total demanded braking amount, the regenerative braking capacity of the second motor 140, and the regenerative braking amount limit, which is the upper limit of the regenerative braking amount for braking safety. The brake controller 260 may transmit the determined allowable regenerative braking amount to the hybrid controller 240. The hybrid controller 240 may determine the regenerative braking torque of the drive wheels based on the allowable regenerative braking amount, rather than determining whether to participate in the regenerative braking of the auxiliary drive wheels based on the rear wheel regenerative braking capacity. Accordingly, the vehicle may be controlled using the same brake controller 260 and hybrid controller 240 regardless of the hybrid vehicle's driving method.

Although the present disclosure has been described and illustrated in conjunction with particular embodiments thereof, it should be apparent to those having ordinary skill in the art that various improvements and modifications may be made to the present disclosure without departing from the technical idea of the present disclosure defined by the appended claims.

## Claims

1. An electrified vehicle comprising:
a powertrain mechanically connected to a main drive wheel (163, 164) which is a rear wheel, and including a drive motor (140);
a driving force distribution device (170) configured to selectively distribute an output torque of the powertrain to an auxiliary drive wheel (161, 162), which is a front wheel; and
a controller (220, 240, 260, 270) configured to control the drive motor (140) and the driving force distribution device (170),
**characterized in that** the controller is further configured to:
upon receiving a braking demand, determine whether the auxiliary drive wheel participates in regenerative braking, based on a regenerative braking capacity of the drive motor; and
control the drive motor (140) and the driving force distribution device (170), based on a determination result of whether the auxiliary drive wheel participates in the regenerative braking (S703, S804, S805, S807).

2. The electrified vehicle of claim 1, wherein the controller (240) is further configured to determine the regenerative braking capacity of the drive motor, based on a rechargeable capacity of a battery and a power generation capacity obtainable through regenerative braking from the drive motor (140) (S801).

3. The electrified vehicle of claim 1 or 2, wherein the controller (260) is further configured to determine an allowable regenerative braking amount of the drive motor (140), based on a total demanded braking amount and the regenerative braking capacity of the drive motor (140) (S303).

4. The electrified vehicle of claim 3, wherein the controller (240, 270) is further configured to determine participation of the auxiliary drive wheel (161, 162) in regenerative braking, based on the allowable regenerative braking amount and a regenerative braking amount limit of the main drive wheel for braking safety of the electrified vehicle (S701, S802).

5. The electrified vehicle of claim 4, wherein the controller (240, 270) is further configured to determine the participation of the auxiliary drive wheel (161, 162) in the regenerative braking upon determining that the allowable regenerative braking amount is greater than the regenerative braking amount limit of the main drive wheel (S701, S802).

6. The electrified vehicle of claim 3, wherein the controller (270) is further configured to, upon determining participation of the auxiliary drive wheel (161, 162) in regenerative braking, determine a distribution ratio between the main drive wheel and the auxiliary drive wheel(S702).

7. The electrified vehicle of claim 6, wherein the controller (240) is further configured to determine a regenerative braking torque for each drive wheel (161, 162, 163, 164), based on the allowable regenerative braking amount and the distribution ratio(S806).

8. The electrified vehicle of claim 7, wherein the controller (240) is further configured to determine the distribution ratio so that a regenerative braking torque of the main drive wheel (163, 164) is greater than or equal to a regenerative braking torque of the auxiliary drive wheel (161, 162) (S806).

9. The electrified vehicle of claim 4, wherein the controller (240) is further configured to, upon determining that the auxiliary drive wheel (161, 162) does not participate in the regenerative braking, determine a regenerative braking torque of the main drive wheel (163, 164) based on the regenerative braking amount limit of the main drive wheel (161, 162) (S804, S806).

10. The electrified vehicle of any one of the preceding claims, wherein the controller (260) is further configured to determine a hydraulic braking amount for each drive wheel (161, 162, 163, 164), based on a regenerative braking execution amount caused by regenerative braking for each drive wheel and a braking amount limit of the main drive wheel for braking safety of the electrified vehicle (S304).

11. The electrified vehicle of claim 10, wherein the controller (260) is further configured to:
determine the braking amount limit of the main drive wheel based on a total braking amount (S302);
upon determining that a regenerative braking execution amount of the main drive wheel is greater than the braking amount limit of the main drive wheel, determine a hydraulic braking amount of the main drive wheel as zero (0); and
determine the hydraulic braking amount of the main drive wheel as a value obtained by subtracting the regenerative braking execution amount of the main drive wheel from the braking amount limit of the main drive wheel (S304).

12. The electrified vehicle of claim 10, wherein the controller (260) is further configured to determine the braking amount limit of the main drive wheel to be less than or equal to half of a total braking amount(S302).

13. A method of regenerative braking control for an electrified vehicle, the method comprising:
determining a regenerative braking capacity of a drive motor upon receiving a braking demand;
**characterized in that** the method further comprises:
determining whether an auxiliary drive wheel (161, 162), which is the front wheel, participates in regenerative braking based on the regenerative braking capacity of the drive motor (140) (S701); and
controlling the drive motor (140) and a driving force distribution device (170) based on a determination result of whether the auxiliary drive wheel (161, 162) participates in the regenerative braking (S703, S804, S805, S807).

14. The method of claim 13, wherein the regenerative braking capacity is determined based on a rechargeable capacity of a battery and a power generation capacity obtainable through regenerative braking from the drive motor (140) (S801).

15. The method of claim 13 or 14, wherein determining whether the auxiliary drive wheel participates in the regenerative braking comprises determining participation of the auxiliary drive wheel (161, 162) in the regenerative braking, based on an allowable regenerative braking amount determined based on a regenerative braking amount limit of a main drive wheel for braking safety of the electrified vehicle, the regenerative braking capacity, and a total demanded braking amount (S701, S802, S803).
